# FASCICULE DE BREVET EUROPEEN

(11) **EP 2 846 975 B1**
(45) Date de publication et mention de la délivrance du brevet: **27.04.2016**
(21) Numéro de dépôt: 12735928.9
(22) Date de dépôt: 09.05.2012
(51) Int. Cl.: B27M 3/00

(54) **PROCEDE ET DISPOSITIF DE FABRICATION D'UN PLI ENTRANT DANS LA CONSTITUTION D'UN PANNEAU MULTI-PLIS**
VERFAHREN UND VORRICHTUNG ZUR HERSTELLUNG EINER LAGE BEI DER HERSTELLUNG EINES MEHRLAGIGEN PANEELS
METHOD AND DEVICE FOR PRODUCING A PLY INVOLVED IN THE CONSTRUCTION OF A MULTIPLY PANEL

(43) Date de publication de la demande: 18.03.2015
(73) Titulaire: Techniwood International, 54320 Maxéville (FR)
(72) Inventeur: RAUDIN, Bruno, F-17100 Les Gonds (FR); FAURE, Pascal, F-73400 Ugine (FR); CHABRIER, Christian, F-74230 La Balme De Thuy (FR)
(74) Mandataire: Rhein, Alain
(86) Numéro de dépôt international: PCT/FR2012/051023
(87) Numéro de publication internationale: WO 2013/167813

(56) Documents cités:
- FR-A- 1 246 469
- US-A- 647 056
- US-A- 1 693 606
- US-A- 2 488 759
- US-A- 2 657 160

## Description

La présente invention concerne la construction de bâtiments. Elle concerne plus particulièrement un procédé de fabrication d'un pli entrant dans la constitution d'un panneau multi-plis pour constituer un plancher ou un mur ou un rampant de toiture, ou alors pour constituer un complément d'un mur, par exemple pour en améliorer l'isolation thermique et/ou phonique, ou la résistance au feu , selon le préambule de la revendication 1. Un tel procédé est connu du document US 1693606. De tels procédés de fabrication peuvent encore être appelés procédés de complexage.

De nombreux matériaux ont été proposés pour constituer des murs, ou compléments de murs, pour en améliorer l'isolation thermique et/ou phonique, ou sa résistance au feu. Avec l'entrée en vigueur de nouvelles normes RT 2012, RT 2020 à venir et labels, les exigences changent, et il est donc nécessaire de pouvoir proposer des qualités de murs ou compléments de murs différents. De plus, la qualité nécessaire n'est pas la même, s'agissant de murs intérieurs ou extérieurs, de plafond, de rampants de toiture, et selon le type de constructions les exigences changent également. Cela oblige le fournisseur de panneaux ou matériaux à prévoir une grande quantité de références, pour pouvoir faire face à tous les besoins.

Pour répondre à ces besoins, le déposant a proposé dans une demande de brevet antérieure un panneau multi-plis pour la constitution ou le complément d'un mur, d'un plancher ou plafond, ou d'un rampant pour un bâtiment, constitué d'un empilement de plis constitués de lames structurelles parallèles, de préférence en bois, et de lames de remplissage disposées entre les lames structurelles en un matériau différent que celui des lames structurelles, lesdits matériaux pouvant être sélectionnés pour leur isolation thermique ou acoustique, leur inertie thermique ou leur résistance au feu.

Néanmoins, la fabrication de tels panneaux n'est pas aisée. Les procédés artisanaux permettent de les fabriquer, mais sont longs et coûteux. Les procédés industriels connus ne permettent que la fabrication de plis constitués d'un seul type de lames, et ne conviennent pas à la fabrication d'un panneau dont les plis sont constitués de plusieurs types de lames. Si on applique un procédé d'assemblage adapté pour le bois, les lames en laine de roche sont écrasées par la pression excessive. En revanche si on applique des pressions plus faibles, le joint de colle entre deux lames de bois n'atteint pas la résistance recherchée. Par ailleurs les procédés connus ne permettent pas la fabrication de panneaux avec des ouvertures intégrées. Au contraire, de telles ouvertures doivent être découpées dans le panneau une fois assemblé, ce qui occasionne d'importantes chutes de matières.

La présente invention a pour but de pallier au moins en partie à ces inconvénients. A cet effet elle propose un procédé de fabrication d'un pli entrant dans la constitution d'un panneau multi-plis pour la constitution ou le complément d'un mur, d'un plancher ou plafond, ou d'un rampant pour un bâtiment, ledit pli étant constitué d'une juxtaposition de lames, lesdites lames étant soit des lames structurelles, de préférence en bois, soit des lames de remplissage disposées entre les lames structurelles en un matériau différent que celui des lames structurelles, lesdits matériaux pouvant être sélectionnés pour leur isolation thermique ou acoustique, leur inertie thermique ou leur résistance au feu, ledit procédé comprenant les étapes suivantes :
- la pose d'une première lame sur une table, un premier chant latéral contre une butée, le deuxième chant latéral selon un plan d'assemblage de lames prédéfini et constituant un repère,
- l'encollage du premier chant latéral d'une deuxième lame, la mise en contact par un moyen de mise en contact dudit premier chant latéral avec le deuxième chant de la première lame sur le plan d'assemblage, formant ainsi un assemblage de deux lames, et le deuxième chant latéral, non encollé, de la deuxième lame formant le chant d'extrémité du pli en cours de fabrication,
- le déplacement latéral dudit pli en cours de fabrication par rapport au plan d'assemblage, jusqu'à ce que le chant d'extrémité du pli en cours de fabrication corresponde au plan d'assemblage,
- l'encollage du premier chant latéral d'une troisième lame,
- et ainsi de suite jusqu'à l'assemblage de toutes les lames du pli,

Ce procédé est particulier en ce que chaque déplacement latéral dudit pli en cours de fabrication par rapport au plan d'assemblage est effectué par le déplacement synchronisé de la table avec laquelle le pli en cours de fabrication est en contact par sa face inférieure et d'un moyen d'entraînement avec lequel le pli en cours de fabrication est en contact par sa face supérieure.

Grâce à ces dispositions, le pli en cours de fabrication est parfaitement maintenu sans exercer de pression susceptible de détériorer les lames de remplissage ; cela permet donc d'assembler un pli avec des lames de caractéristiques très différentes, certaines de ces lames étant incapables par elles-mêmes de tenir les lames adjacentes ; ce procédé permet en plus de constituer un pli avec des ouvertures.

Selon d'autres caractéristiques :
- ladite table peut être mobile en rotation, entre deux positions perpendiculaires, permettant ainsi de réaliser avec la même table des plis longitudinaux et des plis transversaux,
- ledit déplacement synchronisé de la table et du moyen d'entraînement peut s'accompagner en outre du déplacement également synchronisé dudit moyen de mise en contact, de sorte à accompagner le mouvement de la lame qui vient d'être mise en contact,
- au moins une lame du pli peut être décomposée en au moins deux parties, de sorte à laisser un vide entre lesdites deux parties, ledit vide étant destiné à former dans le pli entier une ouverture, par exemple pour une fenêtre ou une porte,

L'invention concerne également un procédé de fabrication d'un panneau multi-plis pour la constitution ou le complément d'un mur, d'un plancher ou plafond, ou d'un rampant pour un bâtiment, ledit panneau étant constitué d'un empilement de plis dont au moins un pli mixte constitué de lames structurelles parallèles, de préférence en bois, et de lames de remplissage disposées entre les lames structurelles en un matériau différent que celui des lames structurelles, lesdits matériaux pouvant être sélectionnés pour leur isolation thermique ou acoustique, leur inertie thermique ou leur résistance au feu, caractérisé en ce qu'il comprend les étapes suivantes :
- préparation des lames structurelles et des lames de remplissage,
- fabrication d'un pli par un procédé selon l'invention,
- convoyage sans déformation dudit pli vers une zone de pressage par un moyen de convoyage sans déformation,
- assemblage par collage dudit pli à d'autres plis, pour former un panneau,
- usinage de mise en dimensions finales du panneau

Grâce à ces dispositions, le procédé selon l'invention permet la fabrication industrielle et automatisée de panneaux comprenant des plis mixtes, ce qui permet de fabriquer de tels panneaux avec toutes leurs variantes de caractéristiques, à des prix concurrentiels.

Selon d'autres caractéristiques :
- ledit moyen de convoyage peut être configuré apte à exercer un effort de portage sur chaque lame du pli ; ceci permet de constituer un pli avec des lames de nature différente, et notamment avec un mélange de lames structurelles et de lames de remplissage, les lames de remplissage n'étant pas sollicitées au-delà de leur propre poids,
- l'étape de préparation des lames structurelles peut comprendre un rabotage sur quatre faces, de sorte à améliorer la précision géométriques desdites lames, permettant ainsi un contact suffisant pour le collage, sans nécessiter l'application d'une pression qui ne serait pas supportable par les lames de remplissage,
- l'étape de préparation des lames de remplissage peut comprendre un aboutage de plusieurs lames, permettant ainsi une utilisation optimale de la matière première,
- ledit assemblage par collage dudit pli à d'autres plis peut être effectué par une presse pilotée par une épaisseur à obtenir, quelle que soit la pression à exercer, de sorte à garantir le contact entre lames structurelles de deux plis adjacents ; en effet les lames de remplissage peuvent alors présenter une épaisseur moins bien calibrée, ce qui facilite leur préparation, seules les lames structurelles étant calibrées en épaisseur, et la presse est pilotée sur l'épaisseur des lames structurelles ; les lames de remplissage se compriment, et le joint de collage entre lames structurelles est garanti,
- ledit usinage de mise en dimensions finales du panneau peut être effectuée par un centre d'usinage 6 faces, ce qui permet d'éviter des manipulations supplémentaires du panneau, qui serait une perte de temps et un risque de détérioration, et ce qui permet aussi d'améliorer la précision desdits panneaux, du fait qu'on évite un repositionnement du panneau entre les usinages de deux faces distinctes.

La présente invention concerne également un dispositif spécialement adaptée pour mettre en oeuvre le procédé selon l'invention. Ce dispositif est particulier en ce qu'il comprend un repère constituant un plan d'assemblage, une table mobile en translation par rapport audit repère, et un moyen de mise en déplacement latéral par contact sur la face supérieure d'un pli destiné à être fabriqué, ledit moyen de mise en déplacement étant apte à avoir un mouvement synchronisé avec le déplacement de ladite table par rapport audit repère.

Selon d'autres caractéristiques :
- ledit plan d'assemblage peut être fixe, permettant ainsi une alimentation en lames toujours au même endroit
- ledit moyen de mise en déplacement latéral peut comprendre des bandes enroulées sur trois cylindres, et conçues pour qu'un des brins desdites bandes soit parallèle à ladite table, et apte à effectuer un mouvement synchronisé avec ladite table par rapport audit plan d'assemblage, constituant ainsi une solution simple et robuste,
- ladite table peut en outre être mobile en rotation entre deux positions perpendiculaires, permettant ainsi de fabriquer des plis longitudinaux et transversaux avec la même table.

L'invention concerne enfin une installation spécialement conçue pour fabriquer un panneau multi-plis comprenant un dispositif de fabrication d'un pli selon l'invention, et dans laquelle ledit moyen de convoyage sans déformation comprend des rangées de moyens aspirants aptes à être appliqués sur le dessus d'un pli entier et de le soulever, lesdites rangées étant inclinées par rapport à la direction des lames qu'elles soient longitudinales ou transversales, de sorte à assurer une bonne prise de chaque lame en position longitudinale et en position transversale

L'avantage apporté par la présente invention réside principalement en ce qu'il devient possible de fabriquer de manière industrielle, et donc à des coûts compétitifs, des panneaux de composition très variée, et avec des matériaux variés également. La présente invention permet donc la mise en oeuvre de panneaux améliorés dans le bâtiment.

La présente invention sera mieux comprise à la lecture de la description détaillée qui suit, et qui est donnée à titre d'exemple, sans que ces exemples puissent être interprétés comme réduisant la portée de l'invention.

La compréhension de cette description sera facilitée en se référant aux dessins joints, dans lesquels :
- la figure 1 représente une vue de profil d'un dispositif selon l'invention lors d'une première étape de fabrication d'un pli,
- la figure 2 représente le dispositif de la figure 1 lors d'une deuxième étape de fabrication d'un pli,
- la figure 3 représente le dispositif de la figure 1 lors d'une troisième étape de fabrication d'un pli,
- la figure 4 représente le dispositif de la figure 1 lors d'une quatrième étape de fabrication d'un pli,
- la figure 5 représente le dispositif de la figure 1 avec la table tournée de 90°, pour la fabrication d'un pli longitudinal, lors de l'étape correspondant à celle de la fig. 4 de fabrication d'un pli,

Les caractéristiques des plis et produits constituants les plis peuvent être les suivants :
Les plis ont une longueur maximale de 8500 mm, et minimale de 2000 mm, une largeur maximale de 3500 mm et minimale de 2000 mm, une épaisseur maximale de 50 mm et minimale de 25 mm, par exemple 45 mm.

Le poids d'un pli 100% bois au format maximal en épaisseur 50 mm est de 803 Kg.

Les plis peuvent être constitués de rangées (lames) dégressives, pour réaliser un pignon par exemple. Les ouvertures brutes de fenêtres, portes ou réservations sont inscrites au pli sans jamais déboucher sur la périphérie du pli. La distance minimum séparant une ouverture de la périphérie d'un pli est de 300 mm. La distance minimum entre 2 ouvertures est de 300 mm.

Les plis sont normalement composés à partir de trois matériaux de lames différents au maximum. Les lames de bois sont généralement de même largeur dans un pli. Les isolants sont habituellement de même matière et de même largeur dans un pli, parfois de deux matières différentes, rarement plus. Un isolant de la même matière peut être découpé sur mesure à la largeur utile.

Quelque-soit le produit, celui-ci est de préférence de section rectangulaire et coupé droit aux extrémités.

Un pli est constitué de rangées (lames) en parallèle, collées entre elles par un ou plusieurs cordons de colle sur un chant ; une colle Hotmelt est un exemple de colle bien adaptée pour cette application. Une rangée peut être constituée d'une lame unique faisant la longueur du pli ou de deux lames séparées par une ouverture, ou encore de trois lames séparées par deux ouvertures.

Dans une rangée constituée de deux ou trois lames séparées par une ou des ouvertures, celles-ci seront de préférence de même section.

Une lame d'isolant peut être constituée de plusieurs tronçons recollés entre eux par 1 cordon de colle, par exemple Hotmelt, sur une extrémité. On travaillera de préférence avec des tronçons de longueur minimale 300 mm.

La fonction de panneautage ne corrige pas les déformations des composants tels que cintre, hélice ou désaffleure. Pour éviter les cintres et garantir un affleurement correct, les lames structurelles sont usinées dans leur phase de préparation, pour leur conférer des dimensions et formes précises. Concernant l'hélice, le collage au niveau du panneautage (assemblage d'un pli) doit avoir une tenue suffisante pour que la lame adjacente accompagne la déformation d'hélice, de sorte que celle-ci puisse être neutralisée au moment du collage des plis entre eux pour former le panneau.

Un pli moyen peut avoir les dimensions et caractéristiques suivantes :
* Lames de bois de section 150 x 30 mm.
* Géométrie périphérique rectangulaire.
* Longueur 6500 mm.
* Largeur 3200 mm.
* 1 Ouverture de fenêtre.
* 1 Ouverture de porte.
* 1 Rangée constituée d'isolant sur mesure.
* Pli isolant, 20% de bois & 80% de laine de roche.
* Pli structurel, 50% de bois & 50% de PSE graphité, ou laine de verre

Toute autre colle aux caractéristiques équivalentes et fournie en conditionnement similaire peut être utilisée.

Les caractéristiques des galettes peuvent par exemple être les suivantes :
Une galette, définie comme un assemblage de plis similaires, un panneau étant un assemblage de quelques galettes, est composée de 2 à 10 plis généralement croisés à 90°. Une galette est composée de plis de même format, ayant les mêmes ouvertures, le cas échéant à un décalage de feuillure près, et alignés dans leur empilage. Les plis sont collés entre eux par cordons appliqués au minimum sur les zones de contact des bois entre eux, par exemple avec une colle froide PUR monocomposant ou bi-composant, structurelles ou non structurelles suivant l'application

Les galettes peuvent être plutôt isolantes, structurelles ou mixtes. Leur longueur hors tout peut par exemple varier entre une dimension maximale de 8500 mm, et une dimension minimale de 2000 mm. Leur largeur hors tout peut par exemple varier entre une dimension maximale de 3500 mm et une dimension minimale de 2000 mm. Leur épaisseur peut par exemple varier entre une dimension maximale de 300 mm, et une dimension minimale de 50 mm.

Le poids d'une galette de 8500 mm de long, 3500 mm de large et d'épaisseur 300 mm est d'environ 2800 Kg avec 50% de bois.

Après pressage, les galettes peuvent être usinées et équipées d'appareillage.

La colle utilisée pour la constitution des galettes peut être :
- soit une colle froide PUR Mono-composants, aux caractéristiques suivantes : colle PURBOND HB S-Line HB S109 à HB S309, base conditionnée en cuve de 1000 Kg, température : mini 18°C, idéale 20 °C,
- soit une colle froide PUR Bi-composants, aux caractéristiques suivantes : colle KLEIBERIT 2C PUR 541.6 + activateur 3 à 20%, base conditionnée en cuve de 1000 Kg, activateur en bidon de 250 Kg, dosage d'application du mélange réglable,
- toute autre colle de caractéristiques équivalentes.

Les panneaux peuvent être réalisés en une seule opération, comme une galette, ou par assemblage de galettes, ou par assemblage de galettes avec des plis complémentaires. Lors de l'assemblage de galettes ou de galettes avec des plis complémentaires, les faces affichées sont de préférence croisées à 90 °.

Les galettes et plis assemblés pour constituer un panneau peuvent être collés avec la même colle et suivant le même procédé que lors de la composition d'une galette.

Dans le cas de l'utilisation de la colle bi-composant, les 4 temps ouverts différents pourront être gérés automatiquement en fonction du type de galette constituée afin d'optimiser la production.

Dans le cas de l'utilisation de la colle mono-composant, celle-ci a un temps ouvert constant. On peut prévoir un deuxième circuit de dépose de colle mono-composant ayant un temps ouvert différent, ce qui permet d'optimiser la production en sélectionnant la dépose de la colle ayant le temps ouvert le plus approprié à la galette en cours de production.

Les galettes et plis assemblés sont de même géométrie, avec les mêmes ouvertures, mais avec des formats différents pour créer les imbrications brutes d'assemblage et les feuillures brutes dans les ouvertures.

Dans le cas d'assemblage de plis sur une galette, les débordements de plis, en fonction de leur dimension, peuvent être soutenus par un calage de l'épaisseur de la galette et de la surface du débordement pour garantir un bon pressage.

La base d'un mur fini doit être suffisamment rigide pour supporter une manutention verticale.

Les décalages de plis ou galettes à l'assemblage sont par exemple inférieurs ou égales à 300 mm.

Le poids d'un panneau peut être de 3500 Kg.

On précise ci-après un exemple de principe de fonctionnement du procédé selon l'invention.

Pour chaque panneau lancé en production, un fichier est généré par la CAO, au format du type BTL ou XML, et transmis par réseau Ethernet ou téléchargé par clef USB sur le PC principal. Le système de supervision est dimensionné pour prendre en charge la distribution des informations de production, le suivi et la traçabilité de la fabrication des panneaux. Les paramètres d'appareillage et de finition des panneaux sont redistribués aux opérateurs.

Ledit fichier contient toutes les informations utiles à la fabrication du panneau, de la première à la dernière étape. Ce fichier est transformé pour une part en fichiers texte à destination des machines, pour une autre part en liste de production pour les postes manuels.

Au lancement de la production d'un pli, les longueurs de lames sont appelées sur chaque ligne de recoupe automatique, la largeur et la longueur de lame sur mesure est affichée au poste dédié.

Les lames de bois sont toujours en une seule longueur. Les lames d'isolant sont constituées par un ou plusieurs morceaux aboutés par simple encollage en extrémité.

Si la longueur de lame demandée est supérieure à la longueur d'isolant engagée dans la scie de recoupe, un complément est coupé dans la longueur d'isolant suivante.

L'encollage de l'extrémité du second morceau et des suivant s'il y a lieu, s'effectue lors de l'éjection du tapis de sortie de la scie de recoupe.

Quand la longueur restante est inférieure à 300 mm, celle-ci est éjectée au rebut.

Une fois à disposition les lames sont chargées dans l'ordre de constitution, en prenant en compte la dégressivité des rangées et le bas du panneau final.

Les lames sont encollées verticalement sur leur chant supérieur puis positionnées longitudinalement sur des butées numérisées. Une, deux ou trois lames peuvent être successivement chargées pour constituer une rangée, puis elles sont basculées à plat et appliquées latéralement contre les précédentes.

La première rangée est positionnée contre une règle de référence, le positionnement des suivantes est assuré par le déplacement numérisé de la table de composition, synchronisé avec les systèmes d'application et de pressage supérieur des lames.

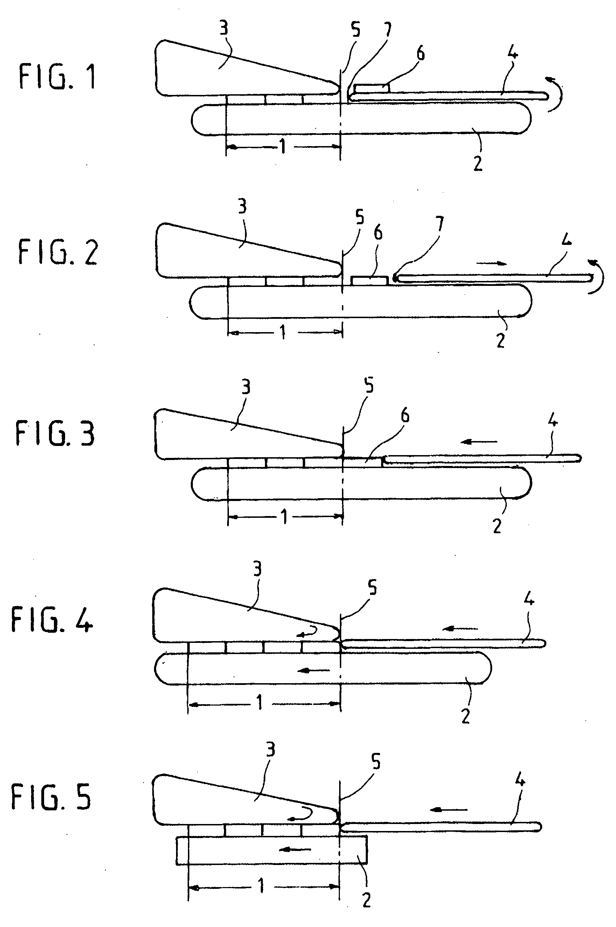

Comme on peut le voir sur les fig. 1 à 5, le pli en cours de fabrication 1 est disposé sur la table 2, maintenu sous le système de pressage supérieur 3. Le système de pressage supérieur peut être constitué d'un ensemble de bandes enroulées autour de trois cylindres, l'un des brins des bandes étant parallèle à la table, et apte à exercer un effort d'appui sur le pli en cours de fabrication 1. Le système d'alimentation et d'application 4 est constitué d'un ensemble de convoyeurs parallèles à la table 2. Ces convoyeurs transportent la ou les lames 6 (deux ou trois lames, en cas de présence d'une ouverture dans le pli en cours de fabrication) en position à plat jusqu'au plan d'assemblage 5. L'extrémité du convoyeur 4 est disposée à proximité dudit plan d'assemblage 5, et le convoyeur est en marche pour amener les lames jusqu'à ce plan d'assemblage 5. Dès que le chant encollé des lames arrive à proximité du plan d'assemblage 5, le convoyeur 4 se met à reculer tout en continuant à tourner, ce qui provoque la dépose des lames sur la table 2 (fig. 2). Dès que la dépose est complète, le convoyeur 4, muni d'une règle 7 en son extrémité, vient mettre en contact les lames 6 avec le pli en cours de fabrication 1, en les poussant, puis en appliquant une légère pression de mise en contact (fig. 3). Ensuite a lieu un mouvement synchronisé à la fois de déplacement latéral de la table 2 et de mise en route des convoyeurs du moyen de pressage supérieur 3, de sorte à déplacer le pli en cours de fabrication qui vient de s'agrandir d'une rangée de lames, sans contrainte dans les joints de colle, et sans déformation, jusqu'à ce que la nouvelle extrémité du pli en cours de fabrication soit au droit du plan d'assemblage 5. De préférence on y ajoute le déplacement des convoyeurs du système d'alimentation et d'application 4, pour maintenir les lames 6 en contact avec le pli en cours de fabrication 1 jusqu'à ce que cette lame soit également bien prise par le moyen de pressage supérieur 3 (fig. 4).

Dans les fig. 1 à 4, la table est représentée dans son sens longitudinal, et peut présenter une longueur de l'ordre de 10 mètres. Cette disposition permet de fabriquer un pli, par exemple de dimensions 8m par 3m, transversal, avec un plus grand nombre de lames de longueur 3m.

La fig. 5 représente la même étape que la fig. 4, mais avec la table représentée dans son sens transversal, dans lequel elle présente par exemple une largeur de 4 mètres. Cette disposition permet de fabriquer un pli, par exemple de dimensions 8m par 3m, longitudinal, avec un plus petit nombre de lames de longueur 8m.

La table 2 peut être munie d'un moyen de rotation autour d'un axe vertical pour passer de la position transversale à la position longitudinale
On peut aussi prévoir deux dispositifs distincts, l'un pour fabriquer les plis longitudinaux, l'autre pour fabriquer les plis transversaux.

L'application des lames entre-elles s'effectue sous le système de pressage afin d'assurer un tac et une prise de la colle entre des pièces affleurantes.

Le pressage supérieur des lames lors du collage entre les lames, permet de toujours maintenir affleurant l'isolant et les lames de bois, y compris lorsque ces dernières présentent un défaut du type hélice, et ce jusqu'à l'assemblage des plis.

Une fois le pli fini, celui-ci est orienté dans le bon sens et transféré sur la navette de transfert vers la zone d'assemblage. On peut prévoir, pour faciliter ce transfert, que la table 2 est équipée d'un convoyeur à bande couvrant toute la surface de la table, et dont la fonction est ce transfert sur la navette de transfert.

Les plis sortants de panneauteuse sont positionnés longitudinalement avant leur préhension et leur stockage sur les tables intermédiaires.

Une fois tous les plis disponibles pour la constitution d'une galette, le premier pli est introduit sur la table d'encollage.

Les passes d'encollage et de dépose des plis s'alternent jusqu'à la composition de la galette complète.

Pour la manutention d'un pli, il importe d'utiliser un moyen de convoyage sans déformation, qui permette d'éviter une détérioration des lames de remplissage, ainsi qu'une séparation des joints collés entre les lames, et ceci même si le pli présente de larges ouvertures. Il a donc été mis au point une machine de prise par ventouses, configurée pour que chaque lame structurelle soit en prise avec plusieurs ventouses. Pour y parvenir, on a disposé des rangées de ventouses, lesdites rangées étant inclinées par rapport à la direction des lames, ce qui permet de garantir une bonne prise de chaque lame structurelle, que le pli soit longitudinal ou transversal.

La galette préparée est introduite dans la presse qui peut comporter 2 niveaux. Les galettes à usiner sont introduites sur le centre d'usinage pour un usinage intégral d'une ou deux faces. Les galettes usinées sont ensuite transférées sur la table d'équipement.

Une galette usinée peut être assemblée avec un pli ou une galette brute. Deux galettes usinées peuvent être assemblées entre elles et l'opération peut être répétée si nécessaire, dans les limites de l'épaisseur totale admissible, qui peut par exemple être de 600 mm.

Une fois assemblé, un panneau peut passer par un usinage final ou non.

Les panneaux passent ensuite sur une première table, pour permettre des opérations de retouches de traitement, de pose des accessoires complémentaires, d'agrafage du pare vapeur et de clouage des tasseaux intérieurs.

Les panneaux sont ensuite retournés de cette table sur une deuxième table, pour permettre des opérations de pose des accessoires supplémentaires, d'agrafage du pare pluie et de clouage des tasseaux extérieurs.

Avant relevage, l'opérateur peut fixer deux piges de guidage.

Les panneaux ainsi préparés sont ensuite stockés, distribués sur les différents postes de pose des menuiseries et finition.

Les plis fabriqués selon l'invention sont souvent des plis comprenant à la fois des lames de bois et des lames d'isolants. Les lames d'isolants sont beaucoup moins résistantes que les lames de bois, et l'ensemble du pli, une fois les lames collées entre elles, ne présente pas une bonne résistance, au point que le pli doit être manutentionné avec une grande précaution. On peut prévoir pour cela un équipement comme suit :
Pour les plis, un convoyeur à bande modulaire, de longueur 10.700 mm, et de largeur utile 3800 mm, avec une vitesse d'avance sur bande variable, et un seul sens de marche, une règle latérale de mesure, une butée de sécurité en bout.

Bien entendu toute table d'un type différent, mobile en translation pour la constitution d'un pli, convient également. La mise en marche de la bande sert à évacuer le pli terminé, et là aussi un autre moyen d'évacuation du pli peut être appliqué sans sortir du cadre de la présente invention. La table peut être mobile en rotation entre deux positions perpendiculaires, de sorte à pouvoir effectuer les plis longitudinaux et transversaux avec la même table dans les deux positions, mais on peut aussi prévoir deux tables distinctes, l'une pour les plis longitudinaux, l'autre pour les plis transversaux, sans sortir du cadre de l'invention.

Un poste de stockage de plis, avec une structure porteuse mécano-soudée et stabilisée, deux plages de stockage, une surface porteuse antidérapante, plane et perforée, avec une capacité de charge de 10 plis par plage.

Pour les galettes structurelles appareillées, un convoyeur à bande modulaire, de longueur 11.700 mm, de largeur utile 3800 mm, avec une vitesse d'avance sur bande variable et numérisée, et deux sens de marche, une règle latérale de mesure, une butée de sécurité en bout.

Un manipulateur de transfert et application des plis et galettes, avec deux portiques de roulement mécano-soudés, de longueur 27.000 mm, des stabilisateurs latéraux au poste (B20), un chariot de translation bipoutre numérisé, de course 20.000 mm, un palonnier de préhension par dépression équipé de caissons auto-obturants, et un vide généré par une turbine insonorisée.

La course verticale du palonnier peut être de 1200 mm, et on peut prévoir des démarrages et arrêts progressifs des mouvements de levage et de translation.

Concernant le pressage des galettes, il faut également prévoir un équipement particulièrement adapté, pour s'assurer du bon contact des lames structurelles de deux plis successifs, même si les lames de remplissage isolantes présentent une épaisseur un peu plus grande. On peut par exemple prévoir un équipement comme suit.

Une presse mécanique à un niveau, avec une structure générale mécano-soudée conçue pour deux niveaux, mais associée à un étage inférieur, une presse basse composée d'un convoyeur bas qui monte en pression sur un plateau fixe supérieur, un convoyeur à bande de longueur 9.300 mm, et de largeur utile 3.800 mm, une vitesse d'avance sur bandes variable, un passage de 650 mm, presse ouverte, une presse à déplacement parallèle assuré par un équilibrage mécanique, une pression obtenue par pilotage automatique de la fermeture en fonction d'une cote de serrage prédéterminée du panneau, ajustée en fonction de la composition du panneau et de la pression spécifique désirée.

La pression à envisager sur la surface totale de 8500 x 3500 mm peut être de deux DaN/cm².

## Revendications

1. Procédé de fabrication d'un pli entrant dans la constitution d'un panneau multi-plis pour la constitution ou le complément d'un mur, d'un plancher ou plafond, ou d'un rampant pour un bâtiment, ledit pli étant constitué d'une juxtaposition de lames (6), lesdites lames (6) étant soit des lames structurelles, de préférence en bois, soit des lames de remplissage disposées entre les lames structurelles en un matériau différent que celui des lames structurelles, lesdits matériaux pouvant être sélectionnés pour leur isolation thermique ou acoustique, leur inertie thermique ou leur résistance au feu, ledit procédé comprenant les étapes suivantes :
- la pose d'une première lame sur une table, un premier chant latéral contre une butée, le deuxième chant latéral selon un plan d'assemblage (5) de lames prédéfini et constituant un repère,
- l'encollage du premier chant latéral d'une deuxième lame (6), la mise en contact par un moyen de mise en contact (4) dudit premier chant latéral avec le deuxième chant de la première lame sur le plan d'assemblage, formant ainsi un assemblage de deux lames, et le deuxième chant latéral, non encollé, de la deuxième lame formant le chant d'extrémité du pli en cours de fabrication (1),
- le déplacement latéral dudit pli en cours de fabrication (1) par rapport au plan d'assemblage, jusqu'à ce que le chant d'extrémité du pli en cours de fabrication corresponde au plan d'assemblage (5),
- l'encollage du premier chant latéral d'une troisième lame (6),
- et ainsi de suite jusqu'à l'assemblage de toutes les lames du pli,
**caractérisé en ce que** chaque déplacement latéral dudit pli en cours de fabrication (1) par rapport au plan d'assemblage (5) est effectué par le déplacement synchronisé d'une table (2) avec laquelle le pli en cours de fabrication (1) est en contact par sa face inférieure et d'un moyen d'entraînement (3) avec lequel le pli en cours de fabrication (1) est en contact par sa face supérieure.

2. Procédé selon la revendication précédente, dans lequel ledit déplacement synchronisé de la table (2) et du moyen d'entraînement (3) s'accompagne en outre du déplacement également synchronisé dudit moyen de mise en contact (4), de sorte à accompagner le mouvement de la lame (6) qui vient d'être mise en contact.

3. Procédé selon l'une des revendications précédentes, dans lequel au moins une lame (6) du pli est décomposée en au moins deux parties, de sorte à laisser un vide entre lesdites deux parties, ledit vide étant destiné à former dans le pli entier une ouverture, par exemple pour une fenêtre ou une porte.

4. Procédé de fabrication d'un panneau multi-plis pour la constitution ou le complément d'un mur, d'un plancher ou plafond, ou d'un rampant pour un bâtiment, ledit panneau étant constitué d'un empilement de plis dont au moins un pli mixte constitué de lames structurelles parallèles, de préférence en bois, et de lames de remplissage disposées entre les lames structurelles en un matériau différent que celui des lames structurelles, lesdits matériaux pouvant être sélectionnés pour leur isolation thermique ou acoustique, leur inertie thermique ou leur résistance au feu, **caractérisé en ce qu'**il comprend les étapes suivantes :
- préparation des lames structurelles et des lames de remplissage,
- fabrication d'un pli par un procédé selon l'une des revendications précédentes,
- convoyage sans déformation dudit pli vers une zone de pressage par un moyen de convoyage sans déformation,
- assemblage par collage dudit pli à d'autres plis, pour former un panneau,
- usinage de mise en dimensions finales du panneau

5. Procédé selon la revendication précédente, dans lequel ledit moyen de convoyage sans déformation est configuré apte à exercer un effort de portage sur chaque lame (6) du pli.

6. Procédé selon l'une des revendications 4 à 5, dans lequel l'étape de préparation des lames structurelles comprend un rabotage sur quatre faces, de sorte à améliorer la précision géométriques desdites lames (6).

7. Procédé selon l'une des revendications 4 à 6, dans lequel l'étape de préparation des lames de remplissage comprend un aboutage de plusieurs lames, permettant ainsi une utilisation optimale de la matière première.

8. Procédé selon l'une des revendications 4 à 7, dans lequel ledit assemblage par collage dudit pli à d'autres plis est effectué par une presse pilotée par une cote de serrage à obtenir selon l'épaisseur des lames structurelles, de sorte à garantir le contact entre lames structurelles de deux plis adjacents.

9. Procédé selon l'une des revendications 4 à 8, dans lequel ledit usinage de mise en dimensions finales du panneau est effectuée par un centre d'usinage 6 faces.

10. Dispositif pour la mise en oeuvre d'un procédé selon l'une des revendications 1 à 3, **caractérisée en ce qu'**il comprend un plan d'assemblage (5) constituant un repère, une table (2) mobile en translation par rapport audit repère, et un moyen de mise en déplacement latéral (3) par contact sur la face supérieure d'un pli destiné à être fabriqué, ledit moyen de mise en déplacement étant apte à avoir un mouvement synchronisé avec le déplacement de ladite table (2) par rapport audit repère (5).

11. Dispositif selon la revendication précédente, dans lequel ledit plan d'assemblage (5) est fixe.

12. Dispositif selon l'une des revendications 10 ou 11, dans lequel ledit moyen de mise en déplacement latéral (3) comprend des bandes enroulées sur trois cylindres, et conçues pour qu'un des brins desdites bandes soit parallèle à ladite table (2), et apte à effectuer un mouvement synchronisé avec ladite table (2) par rapport audit repère (5).

13. Dispositif selon l'une des revendications 10 à 12, dans lequel ladite table (2) est en outre mobile en rotation entre deux positions perpendiculaires.

14. Dispositif selon l'une des revendications 10 à 13, dans lequel ladite table (2) est munie d'un convoyeur à bande permettant le transfert du pli (1) une fois fabriqué vers un autre dispositif.

15. Installation pour la mise en oeuvre d'un procédé selon l'une des revendications 4 à 9, comprenant un dispositif selon l'une des revendications 10 à 14, et dans laquelle ledit moyen de convoyage sans déformation comprend des rangées de moyens aspirants aptes à être appliqués sur le dessus d'un pli entier et de le soulever, lesdites rangées étant inclinées par rapport à la direction des lames qu'elles soient longitudinales ou transversales, de sorte à assurer une bonne prise de chaque lame en position longitudinale et en position transversale.

## Patentansprüche

1. Verfahren zur Herstellung einer Lage bei der Herstellung eines mehrlagigen Paneels für die Herstellung, oder als Ergänzung, einer Wand, eines Bodens oder einer Decke, oder einer geneigten Fläche für ein Gebäude, wobei die besagte Lage aus einer Aneinanderreihung von Leisten (6) besteht, wobei die besagten Leisten (6) entweder strukturelle Leisten, vorzugsweise aus Holz, oder zwischen den strukturellen Leisten angeordnete Füllleisten aus einem anderen Material als dasjenige der strukturellen Leisten sind, wobei die besagten Materialien für ihre thermische oder akustische Isolation, ihrer Wärmeträgheit oder ihrer Feuerfestigkeit ausgewählt werden können, wobei das Verfahren die folgenden Schritte umfasst:
- Legen einer ersten Leiste auf einem Tisch, mit einem ersten Seitenrand gegen einen Anschlag, dem zweiten Seitenrand in einer vorbestimmten Ebene der Zusammenfügung (5) von Leisten, die einen Bezugspunkt bildet,
- Kleben des ersten Seitenrandes einer zweiten Leiste (6), Kontaktieren mit einem Kontaktmittel (4) des ersten Seitenrandes mit dem zweiten Rand der ersten Leiste auf der Zusammenfügungsebene, wobei also eine Zusammenfügung von zwei Leisten gebildet wird, und wobei der zweite nichtverklebte Seitenrand der zweiten Leiste den Endrand der Lage unter Herstellung (1) bildet,
- Seitliche Verschiebung der Lage unter Herstellung (1) relativ zu der Zusammenfügungsebene, bis der Endrand der Lage unter Herstellung mit der Zusammenfügungsebene (5) übereinstimmt,
- Kleben des ersten Seitenrandes einer dritten Leiste (6),
- und so weiter, bis alle Leiste der Lage zusammengefügt sind,
**dadurch gekennzeichnet, dass** jede seitliche Verschiebung der Lage unter Herstellung (1) relativ zu der Zusammenfügungsebene (5) durch die synchronisierte Verschiebung eines Tisches (2), mit dem die Lage (1) unter Herstellung mit seiner unteren Fläche in Berührung ist, und eines Antriebsmittels (3), mit dem die Lage unter Herstellung (1) mit seinem oberen Fläche in Berührung ist, durchgeführt wird.

2. Verfahren nach dem vorhergehenden Anspruch, bei dem die besagte synchronisierte Verschiebung des Tisches (2) und des Antriebsmittels (3) außerdem mit der synchronisierten Verschiebung des besagten Kontaktierungsmittels (4) zusammengeht, so dass die Bewegung der Leiste (6), die soeben in Berührung gebracht wurde, begleitet wird.

3. Verfahren nach einem der vorhergehenden Ansprüche, bei dem zumindest eine Leiste (6) der Lage in mindestens zwei Teilen zerlegt ist, so dass ein Spalt zwischen den besagten zwei Teilen gelassen wird, wobei der besagte Spalt dazu bestimmt ist, in der ganzen Lage eine Öffnung, zum Beispiel für ein Fenster oder eine Tür, zu bilden.

4. Verfahren zur Herstellung eines mehrlagigen Paneels für die Herstellung, oder als Ergänzung, einer Wand, eines Bodens oder einer Decke, oder einer geneigten Fläche für ein Gebäude, wobei das Paneel aus einer Aufstapelung von Lagen besteht, von denen mindestens eine gemischte Lage aus parallelen strukturellen Leisten, vorzugsweise aus Holz, und Fülllagen, die zwischen den strukturellen Leisten angeordnet sind und aus einem Material gefertigt sind, das von demjenigen der strukturellen Leisten unterschiedlich ist, besteht, wobei die besagten Materialien für ihre thermische oder akustische Isolation, ihrer Wärmeträgheit oder ihrer Feuerfestigkeit ausgewählt werden können, **dadurch gekennzeichnet, dass** es die folgenden Schritte umfasst:
- Vorbereiten der strukturellen Leisten und der Füllleisten,
- Herstellen einer Lage mittels eines Verfahrens nach einem der vorhergehenden Ansprüche,
- Fördern ohne Verformung der genannten Lage zu einer Presszone mittels einem Mittel zum Fördern ohne Verformung,
- Zusammenfügen durch Kleben der genannten Lage mit anderen Lagen, um ein Paneel zu bilden,
- Bearbeiten zum Erreichen der Endabmessungen des Paneels.

5. Verfahren nach dem vorhergehenden Anspruch, bei dem das besagte Mittel zum Fördern ohne Verformung geeignet konfiguriert ist, um eine Tragkraft auf jede Leiste (6) der Lage auszuüben.

6. Verfahren nach einem der Ansprüche 4 bis 5, bei dem der Schritt der Vorbereitung der strukturellen Leisten ein Hobeln auf vier Flächen umfasst, so dass die geometrische Genauigkeit der besagten Leisten (6) verbessert wird.

7. Verfahren nach einem der Ansprüche 4 bis 6, bei dem der Schritt der Vorbereitung der Füllleisten eine Stumpfverbindung mehrerer Leisten umfasst, wodurch also eine optimale Ausnutzung des Rohstoffes ermöglicht wird.

8. Verfahren nach einem der Ansprüche 4 bis 7, bei dem die Zusammenfügung durch Kleben der besagten Lage mit anderen Lagen durch eine Presse erfolgt, die durch ein je nach der Dicke der strukturellen Leisten zu erreichedes Spanmaß gesteuert wird, so dass die Berührung zwischen den strukturellen Leisten zweier benachbarter Lagen gewährleistet wird.

9. Verfahren nach einem der Ansprüche 4 bis 8, bei dem die besagte Verarbeitung zum Erreichen der Endabmessungen des Paneels durch ein 6-Flächen-Verarbeitungszentrum durchgeführt wird.

10. Vorrichtung zur Durchführung eines Verfahrens nach einem der Ansprüche 1 bis 3, **dadurch gekennzeichnet, dass** sie eine, einen Bezugspunkt bildende Zusammenfügungsebene (5), einen relativ zu dem besagten Bezugspunkt translationsbeweglichen Tisch (2) und Mittel zur seitlichen Verschiebung (3) durch Berührung auf der oberen Fläche einer herzustellenden Lage umfasst, wobei das besagte Mittel zur Verschiebung geeignet ist, eine mit der Verschiebung des besagten Tisches (2) synchronisierte Bewegung relativ zu dem besagten Bezugspunkt (5) zu haben.

11. Vorrichtung nach dem vorhergehenden Anspruch, bei dem die besagte Zusammenfügungsebene (5) fest ist.

12. Vorrichtung nach einem der Ansprüche 10 oder 11, bei dem das besagte Mittel zur seitlichen Verschiebung (3) auf drei Zylindern aufgewickelte Streifen umfasst, die so vorgesehen sind, dass einer der Trümer der besagten Bänder parallel zu dem besagten Tisch (2) und geeignet ist, eine mit dem besagten Tisch (2) synchronisierte Bewegung relativ zu dem besagten Bezugspunkt (5) durchzuführen.

13. Vorrichtung nach einem der Ansprüche 10 bis 12, bei dem der besagte Tisch (2) außerdem drehbeweglich zwischen zwei senkrechten Positionen ist.

14. Vorrichtung nach einem der Ansprüche 10 bis 13, bei dem der besagte Tisch (2) mit einem Förderband versehen ist, das die Überführung der Lage (1), nachdem sie hergestellt worden ist, zu einer anderen Vorrichtung erlaubt.

15. Anlage zur Durchführung eines Verfahrens nach einem der Ansprüche 4 bis 9, umfassend eine Vorrichtung nach einem der Ansprüche 10 bis 14, und bei der das besagte Mittel zum Fördern ohne Verformung Reihen von Saugmitteln umfasst, die geeignet sind, auf dem oberen Teil einer ganzen Lage angebracht zu werden und diese zu heben, wobei die besagten Reihen relativ zur Richtung der Leisten, ohne Rücksicht darauf, ob sie Längs- oder Querleisten sind, geneigt sind, so dass eine gute Aufnahme jeder Lage in Längsposition und in Querposition gesichert wird.

## Claims

1. A method for producing a ply involved in the construction of a multiply panel for forming, or as the complement of, a wall, a floor or a ceiling, or a pitched surface for a building, said ply being formed of a juxtaposition of blades (6), said blades (6) being either structural blades, preferably made of wood, or filling blades arranged between the structural blades, made of a material different from that of the structural blades, whereby said materials may be selected for their thermal or acoustic insulation, their thermal inertia or their fire resistance, said method comprising the following steps:
- laying a first blade on a table, with a first side edge against a stop, the second side edge in a predefined blade assembling plane (5) forming a mark,
- gluing the first side edge of a second blade (6), contacting through a contacting means (4) said first side edge with the second edge of the first blade on the assembling plane, thus forming an assembly of two blades, and the second unglued side edge of the second blade forming the end edge of the ply (1) being produced,
- lateral displacement of said ply (1) being produced relative to the assembling plane, until the end edge of the ply being produced corresponds to the assembling plane (5),
- gluing the first side edge of a third blade (6),
- and so on, until all the blades of the ply are assembled,
wherein each lateral displacement of said ply being produced (1) relative to the assembling plane (5) is performed by the synchronized displacement of a table (2), which the ply being produced (1) is in contact with by its lower face and a driving means (3), which the ply being produced (1) is in contact with by its upper surface.

2. The method according to the preceding claim, wherein said synchronized displacement of the table (2) and the driving means (3) is in addition accompanied by the synchronized displacement of said contacting means (4), so as to accompany the movement of the blade (6), which has just been brought into contact.

3. The method according to one of the preceding claims, wherein at least one blade (6) of the ply is decomposed into at least two parts, so as to leave a gap between said two parts, said gap being aimed at forming an opening in the entire ply, for example for a window or a door.

4. A method for producing a multiply panel for forming, or as the complement of, a wall, a floor or a ceiling, or a pitched surface for a building, said panel being formed of a stack of plies, at least one mixed ply of which is formed of parallel structural blades, preferably made of wood, and filling blades arranged between the structural blades, made of a material different from that of the structural blades, whereby said materials may be selected for their thermal or acoustic insulation, their thermal inertia or their fire resistance, wherein it comprises the following steps:
- preparing the structural blades and the filling blades,
- producing a ply by a method according to one of the preceding claims,
- conveying without deformation said ply towards a pressing area by a means for conveying without deformation,
- assembling said ply by gluing with other plies, in order to form a panel,
- machining for bringing the panel to the final dimensions.

5. The method according to the preceding claim, wherein said means for conveying without deformation is configured capable of exerting a carrying force on each blade (6) of the ply.

6. The method according to one of claims 4 to 5, wherein the step of preparing the structural blades comprises a planing on four sides, so as to improve the geometric accuracy of said blades (6).

7. The method according to one of claims 4 to 6, wherein the step of preparing the filling blades comprises a butt joining of several edges, thus permitting an optimal utilization of the raw material.

8. The method according to one of claims 4 to 7, wherein said assembling by gluing of said ply with other plies is performed by means of a press driven by a clamping dimension to be achieved depending on the thickness of the structural blades, so as to guarantee the contact between the structural blades of two adjacent plies.

9. The method according to one of claims 4 to 8, wherein said machining for bringing the panel to the final dimensions is performed by means of a 6-face machining center.

10. A device for implementing a method according to one of claims 1 to 3, wherein it comprises an assembling plane (5) forming a mark, a table (2) movable in translation relative to said mark, and a means for lateral displacement (3) by contact with the upper surface of a ply to be produced, said means for lateral displacement being capable of having a synchronized movement with the displacement of said table (2) relative to said mark (5).

11. Device according to the preceding claim, wherein said assembling plane (5) is fixed.

12. Device according to one of claims 10 or 11, wherein said means for lateral displacement (3) comprises strips wound around three cylinders and designed such that one strand of said bands is parallel to said table (2), and adapted to perform a synchronized movement with said table (2) relative to said mark (5).

13. Device according to one of claims 10 to 12, wherein said table (2) is in addition movable in rotation between two perpendicular positions.

14. Device according to one of claims 10 to 13, wherein said table (2) is provided with a belt conveyor permitting the transfer of the ply (1) to another device, once it has been produced.

15. Plant for implementing a method according to one of claims 4 to 9, comprising a device according to one of claims 10 to 14, and wherein said means for conveying without deformation comprises rows of suction means capable of being applied against the upper portion of an entire ply and of lifting same, said rows being inclined relative to the direction of the blades, whether they are longitudinal or transverse blades, so as to ensure a proper taking up of each blade in longitudinal position and in transverse position.
